# EUROPEAN PATENT SPECIFICATION

(11) **EP 2 458 707 B1**
(45) Date of publication and mention of the grant of the patent: **13.02.2019**
(21) Application number: 11187583.7
(22) Date of filing: 02.11.2011
(51) Int. Cl.: H02J 9/00, G06F 1/32, G06F 1/26

(54) **STAND-BY CIRCUIT FOR HOUSEHOLD APPLIANCES**
STAND-BY SCHALTUNG FÜR HAUSHALTSGERÄTE
STAND-BY CIRCUIT POUR APPAREILS MÉNAGERS

(30) Priority: 03.11.2010 IT TO20100874
(43) Date of publication of application: 30.05.2012
(73) Proprietor: Whirlpool EMEA S.p.A., 20016 Pero (MI) (IT)
(72) Inventor: Possanza, Mauro, 60044 Fabriano (AN) (IT)
(74) Representative: Dini, Roberto

(56) References cited:
- DE-A1-102007 049 804
- DE-B3-102009 045 967
- US-A- 5 812 386

## Description

### FIELD OF THE INVENTION

The present invention relates to the field of household appliances, and in particular to a stand-by circuit for household appliances, according to the preamble of claim 1.

### DESCRIPTION OF THE PRIOR ART

The recent developments and lower costs of electronic components, along with the need of offering increasingly innovative products to customers, have led to the development of more and more sophisticated household appliances (e.g. ovens, washing machines, television sets, refrigerators, dishwashers).

Many household appliances on the market today utilize big displays that show information about the settings and operation of the appliance, or sensors that detect the operating state of the appliance or physical quantities which are useful or necessary for it to operate correctly.

The increasing use of on-board electronics has led household appliances to use much energy even when they are not operational, i.e. when they are not carrying out their main function, e.g. washing in the case of a washing machine.

Aiming at reducing this energy consumption, a stand-by state is known to be used wherein no power is supplied to a part of the on-board electronics, in particular sensors and video or luminous interfaces.

In the solutions known in the art, as for example described in DE-102007049804-A1 or in US-5812386-A, the system controlling the household appliance's stand-by state includes an electric switch arranged between the AC-DC converter, which transforms an alternating mains voltage into a direct supply voltage, and the on-board electronics. This switch is appropriately driven by a control unit, so that it breaks the electric connection between the direct voltage supply and the downstream electronic circuits when the household appliance enters the stand-by state.

In stand-by state some electronic components still receive power, such as, for example, the control unit, the AC-DC converter and the various filters of the machine.

This solution has the drawback that the energy consumption in stand-by, although much lower than in the operating state, is still far from being null, thus implying that some energy is still wasted.

In known household appliances, a control unit stores the state of the appliance into a nonvolatile memory. Following a blackout, the household appliance first resumes its operating state, so that power is supplied to the control unit, then the latter reads from the memory the state the system was in immediately prior to the blackout, and finally the household appliance resumes that state.

One drawback of this solution is that, if the household appliance was in the stand-by state, after the blackout it will resume operation in the operating state, and only afterwards will it switch again to stand-by. This implies a waste of energy.

### SUMMARY OF THE INVENTION

It is one object of the present invention to improve the stand-by circuit solutions known in the art, in particular for applications in the household appliance industry.

This object is achieved through a stand-by circuit and a related household appliance incorporating the features set out in the appended claims, which are intended as an integral part of the present description.

The idea at the basis of the present invention consists of a stand-by circuit fitted with a monostable switch arranged between the alternating power mains and the AC-DC converter that supplies the on-board electronics. The circuit also comprises an energizer module which, by energizing a control branch of the monostable switch, comprised between two control terminals, holds it in the unstable position, thus electrically connecting the alternating power mains to the AC-DC converter. Upon receiving an active-level stand-by signal from a control unit, the energizer module stops energizing the control branch, thereby causing the monostable switch to switch to its stable position and breaking the electric connection between the power mains and the AC-DC converter.

The circuit further comprises a wake-up switch that, when closed, allows energizing the control branch of the monostable switch when the household appliance is in stand-by state, thereby causing it to wake up from the stand-by state.

The use of such a switch allows to disconnect a considerable portion of the appliance's circuitry from the mains supply when the appliance is in stand-by state.

In this manner, the AC-DC converter and the downstream circuitry no longer receive any power, and the power consumption of the appliance in stand-by is close to 0 W.

Thanks to the use of the energizer module and of the wake-up switch, the monostable switch can be appropriately controlled to place the household appliance in stand-by and to wake it up from that state.

Advantageously, the switch is a two-way monostable relay, which can be controlled by causing a suitable current to flow in the control branch, which comprises a coil; this device is easily available, is reliable, and is suited to withstanding the high currents required by household appliances.

Advantageously, the relay connects the mains voltage, whether directly or indirectly, to a first control terminal of the relay when the latter is not energized, said connection allowing the circuit to be woken up from the stand-by state when the switch closes.

Advantageously, the energizer module comprises a first diode that connects the output of the converter to the first terminal of said relay, a first inverting logic port of the open collector type connected, whether directly or indirectly, between the converter output and a second control terminal of said relay, a second logic port of the open collector type connected, whether directly or indirectly, between the first logic port and a second input of the stand-by circuit, which receives a stand-by signal that determines the circuit state (operating or stand-by). This circuit topology allows implementing the energizer module by using just a few simple components.

Advantageously, a resistive-capacitive network is connected between the second control terminal of the relay and the circuit ground. Said network allows the circuit to resume operation after a blackout in the same state it was in immediately prior to the blackout.

The idea at the basis of the present invention further consists of a method for controlling a household appliance, using the stand-by circuit of the invention, wherein a stand-by signal coming from a control unit causes the switch to open, which is connected between an AC-DC converter and an input of the household appliance connected to an alternating power mains. Furthermore, a push-button pressed by a user causes said switch to close and sets the household appliance back into the operating state.

The method offers the advantage that it allows to achieve a power consumption of the household appliance in stand-by close to 0 W.

Advantageously, according to this method, after a mains blackout the monostable switch will resume the state it was in prior to the blackout.

This method saves energy in the event of a blackout, because the household appliance in stand-by will become active again without first entering the operating state, which would result into a significantly higher energy consumption.

### BRIEF DESCRIPTION OF THE DRAWINGS

Further objects and advantages of the present invention will become more apparent from the following description of a preferred embodiment thereof, which is supplied by way of non-limiting example with reference to the annexed drawings, wherein:
Fig. 1 is a block diagram of a stand-by circuit according to the present invention;
Fig. 2 is a circuit diagram of the stand-by circuit of Fig. 1;
Fig. 3 is a block diagram of a stand-by circuit according to a second embodiment of the present invention;
Fig. 4 is a circuit diagram of the stand-by circuit of Fig. 2;
Fig. 5 shows a circuit for reading the state of a wake-up switch used in the examples of Figs. 1-4;
Fig. 6 shows a washing machine which comprises a stand-by circuit according to the present invention.

In the present invention, identical or equivalent means will be designated by the same reference numerals.

### DESCRIPTION OF THE PREFERRED EMBODIMENT

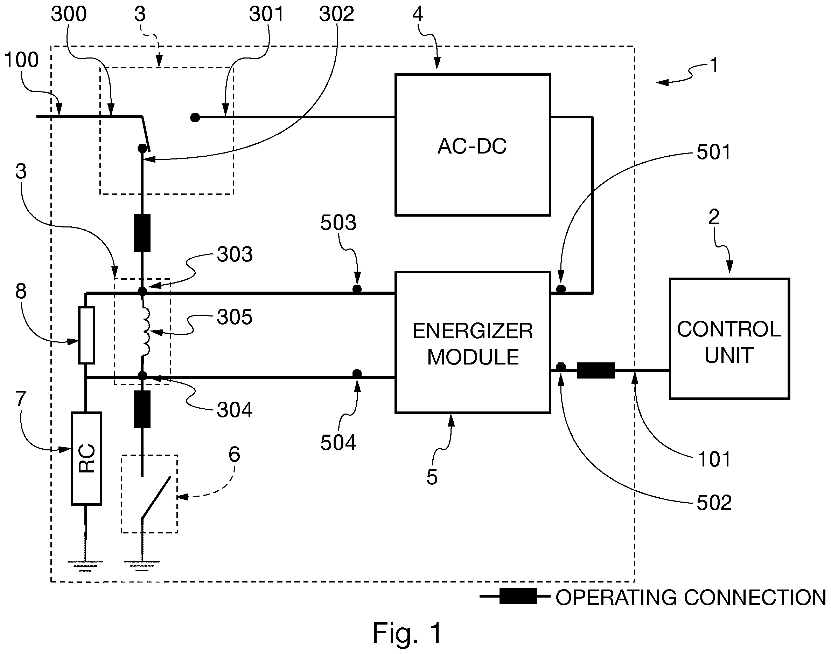

Referring now to Fig. 1, there is shown a block diagram of the stand-by circuit 1 connected to a microcontroller 2, e.g. a microcontroller controlling the operation of a household appliance, e.g. a washing machine.

The stand-by circuit 1 comprises a two-way monostable switch 3, an AC-DC converter 4 that supplies power to the on-board electronics, an energizer module 5, and a wake-up switch 6.

The switch 3 comprises a first terminal 300, referred to as switch input terminal, which coincides with a first input (100) of the stand-by circuit (1). The first terminal 300 of the switch 3 is short-circuited to a second terminal 301 of the switch 3, referred to as NO (Normally Open) terminal, when the switch 3 is energized through an adequate electric signal applied to a control branch 305, said electric control signal being either a current or a voltage with particular form and amplitude characteristics. The switch 3 further comprises a third terminal 302, referred to as NC (Normally Closed) terminal, which is short-circuited to the input terminal 300 of the switch when the switch 3 is in the stable state, which corresponds to the switch not being energized. In particular, in the implementation shown in Fig. 1 the switch 3 is a two-way monostable relay that comprises a control branch 305 between a positive control terminal 303 and a negative one 304, through which an adequate energization current, i.e. the control signal, must necessarily flow for the relay to be in the unstable state.

The AC-DC converter 4 transforms the alternating mains voltage, when present at the converter input, into a direct voltage referring to the circuit's ground voltage. The circuit ground is operationally connected to the neutral terminal of the input alternating voltage. The direct voltage is the converter's operating output voltage. In a particular implementation of the present invention, the value of the operating voltage of the AC-DC converter 4 is 12V.

The AC-DC converter 4 may be any known converter, e.g. a linear or switching converter, and may also comprise auxiliary circuits, e.g. filters, in particular EMC filters, adapted to reduce the noise entering the household appliance from the power mains as well as any noise generated by the appliance itself, which would then be transferred to the power mains.

The energizer module 5 of Fig. 1 comprises two input terminals 501 and 502, which receive the signals that determine the transmission of the control signal adapted to energize the switch 3. The control signal is outputted through the output terminals 503 and 504 of the energizer module 5.

The first input terminal 501 of the energizer module is operationally connected to the output of the AC-DC converter 4, whereas the second input terminal 502 of the energizer module 5 is operationally connected to an output of a control unit 2.

The second input terminal 502 of the energizer module 5 coincides with a second input 101 of the stand-by circuit, adapted to receive signals from the control unit.

The expression "operationally connected devices" refers herein to two devices, whether or not directly connected to each other, such that an electric signal generated by one device affects an electric signal generated by the other device. The electric connection between the two devices may be a direct one, i.e. occurring through a short circuit, or it may be established through one or more third devices of any kind, e.g. resistors, capacitors, diodes, transistors, integrated circuits, etc.

The expression "connected devices" refers herein to a simple connection between two or more devices established through a short circuit, and therefore indicates a particular case of operationally connected devices.

The output terminals 503 and 504 of the energizer module 5 are operationally connected to the two control terminals 303 and 304, respectively, of the switch.

The Normally Open terminal 301 of the switch is operationally connected to the input of the AC-DC converter 4. The first control terminal 303 of the switch is operationally connected to the Normally Closed terminal 302 of the switch.

The second control terminal 304 of the switch is operationally connected to a first terminal of the wake-up switch 6.

A second terminal of the switch 6 is connected to the circuit ground.

In a preferred embodiment, the closing of the switch 6 is controlled by a push-button that can be operated by the user; if the push-button is not pressed, then the switch is open.

When at the first input terminal 501 of the energizer module there is a voltage other than the ground voltage, in particular the operating voltage of the converter 4, e.g. 12V, and at the second input terminal 502 of the module there is not an active stand-by signal, preferably coming from the control unit, then the energizer module energizes the switch, thus keeping it into its unstable state. In this condition, the input terminal 300 of the switch and the Normally Open terminal 301 of the switch are short-circuited and the AC-DC converter 4 has a stable output voltage equal to the operating voltage, and therefore suitable for powering the on-board electronics during the operating phase of the household appliance.

In a particular embodiment, the stand-by signal is active at a high logic level, corresponding to an electric level of the signal typically equal to a direct voltage significantly higher than the ground voltage, such as a microcontroller power voltage, e.g. 3.3 V.

When the converter's operating voltage is not present at the first input terminal 501 of the energizer module, or when the stand-by signal is present at the active level at the second input terminal 502 of the module, the energizer module interrupts its energizing action upon the switch, so that the latter returns into its stable state.

In this condition, the input terminal 300 of the switch and the Normally Closed terminal 302 of the switch are short-circuited; as a consequence, the AC-DC converter 4 and the downstream circuits receive no power, and the household appliance enters stand-by.

The wake-up from the stand-by state is caused by the closing of the wake-up switch 6, preferably operated by pressing the push-button.

The closing of the wake-up switch 6 while the circuit is in stand-by involves the creation of a conductive path between the Normally Closed terminal 302 of the switch, where there is mains voltage, and the circuit ground. The current flowing along this conductive path also flows across the control terminals 303 and 304 of the switch 3, and its amplitude is such that the switch 3 is energized and switched to the unstable state for a time sufficient for the operating voltage to be present at the output of the converter 4. Once this has occurred, the switch 3 is kept energized by the energizer module as previously described.

In a preferred embodiment, a blackout block 7 is connected between the second control terminal 304 of the switch and the circuit ground. In general, the blackout block 7 comprises at least one capacitor acting as a voltage memory unit, preferably a memory unit which is not volatile for at least many days.

During a blackout, the block 7 sets close to ground the voltage at the terminal 304 to which the block 7 is connected, if the circuit 1 was in the operating state immediately before the blackout, or keeps it at a value much higher than the ground voltage, if the circuit 1 was in the stand-by state immediately before the blackout.

The high voltage value prevents any current from flowing in the switch's control branch when the mains voltage returns, so that the circuit will re-activate in stand-by.

On the contrary, a voltage value close to ground allows current to flow in the switch's control branch when the mains voltage returns, so that the circuit will re-activate in the operating state.

In a preferred embodiment, a protection block 8 is connected in parallel to the control branch 305 of the switch. The protection block 8 limits the voltage difference at the control terminals 303 and 304 to a predefined voltage such that the switch cannot suffer any damage in the event of a malfunction.

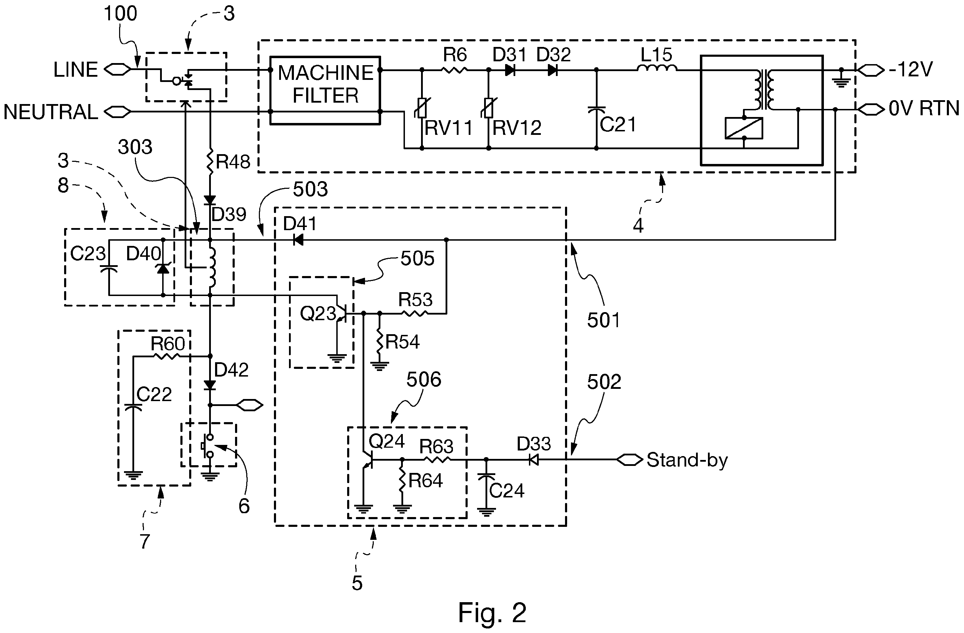

The example of Fig. 2 shows the complete circuit diagram that implements the stand-by circuit 1 of the block diagram of Fig. 1.

The connection between the first control terminal 303 of the switch 3 and the Normally Closed terminal 302 of the switch 3 is established through the series of a resistor R48 and a diode D39 with its cathode towards the control terminal 303.

The connection between the second control terminal 304 of the switch and the wake-up switch 6 is established through a diode D42 with its cathode towards the switch 6.

The energizer module 5 comprises a diode D41, whose anode is connected to the first input terminal 501 of the module and whose cathode is connected to the first output terminal 503.

An input of a first inverting logic port of the open collector type 505 is operationally connected to the first input terminal; in a preferred embodiment, this connection is obtained through a resistive network comprising two resistors R53 and R54. A first terminal of the resistor R53 is connected to the first input terminal 501 of the energizer module 5, a second terminal of the resistor R53 is connected to a first terminal of the resistor R54 and to the input of the first logic port 505, and finally a second terminal of the resistor R54 is connected to ground.

In a preferred embodiment, the first logic port 505 comprises an npn BJT transistor Q23 in grounded emitter configuration, with the collector coinciding with an output of the first logic port 505 and the base coinciding with the input of the first logic port 505.

The energizer module 5 comprises a second inverting logic port of the open collector type 506, whose input is operationally connected to the second input terminal 502 of the module 5. This connection is established through a diode D33 and a capacitor C24: the anode of the diode D33 is connected to the second input terminal of the module 5, the cathode of the diode D33 is connected to a first terminal of the capacitor C24 and to the input of the second logic port 506, and finally a second terminal of the capacitor C24 is connected to ground.

An output of the second logic port 506 is connected to the input of the first logic port 505. In a preferred embodiment, the second logic port 506 comprises an npn BJT transistor Q24 in grounded emitter configuration and a network comprising the resistors R63 and R64. A first terminal of the resistor R63 coincides with the input of the second logic port 506, a second terminal of the resistor R63 is connected to the base of the transistor Q24 and to a first terminal of the resistor R64, a second terminal of the resistor R64 is connected to ground, and finally the collector of the transistor Q24 coincides with the output of the second logic port 506.

In a particular embodiment, the blackout block 7 is the series of a resistor R60 and a capacitor C22.

Finally, the protection block 8 comprises a parallel connection of a capacitor C23 and a Zener diode D40 with its cathode connected to the positive control terminal 303 and its anode connected to the negative control terminal 304.

The diode D40 has a Zener voltage suitable for preventing damage to the switch in case of excessively high voltages; in a particular embodiment, the Zener voltage of the diode D40 is 15 V.

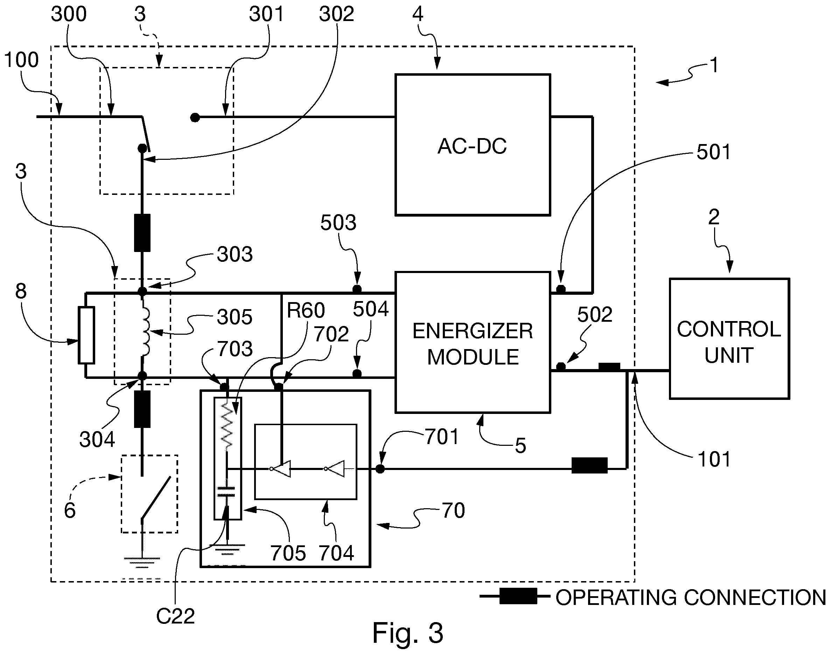

It is apparent that the invention is not limited to the embodiment examples described above with reference to Figs. 1 and 2; the man skilled in the art may therefore make numerous variants to the above-described system. For example, Fig. 3 shows a stand-by circuit 1 with a second blackout block 70.

The blackout block 70 of Fig. 3 has one input terminal 701 and two output terminals 702 and 703. The input terminal 701 is operationally connected to an output of the control unit 2 to receive the stand-by signal, whereas the output terminals 702 and 703 are connected to the switch's control terminals 303 and 304.

The blackout block 70 comprises a drain module 704 and a resistive-capacitive network 705.

The network 705 comprises a resistor R60 and a capacitor C22, wherein a first terminal of the resistor R60 coincides with the output terminal 703 of the block 70, a second terminal of the resistor R60 is connected to a first terminal of the capacitor C22, a second terminal of the capacitor C22 is connected to ground.

An input of the drain module 704 coincides with the input terminal 701 of the blackout block 70, a first output of the drain module 704 coincides with the output 702 of the blackout block 70, a second output of the drain module 704 is connected to the first terminal of the capacitor C22, i.e. the one not connected to ground.

When the input terminal 701 of the block 70 is not receiving an active stand-by signal, the drain module 704 has high impedance, i.e. virtually an open circuit, between its two outputs, thus ensuring an operation quite similar to that of the previously described block 7.

When an active stand-by signal is present at the input terminal 701 of the block 70, the drain module 704 has low impedance between its two outputs, thus creating a highly conductive path parallel to the control branch 305 of the switch 3. Any charge current of the capacitor C22 that may appear when the switch 3 switches from the unstable state to the stable state will flow along this highly conductive path, rather than in the control branch 305 of the switch 3; this prevents a new, unintentional switching of the switch 3.

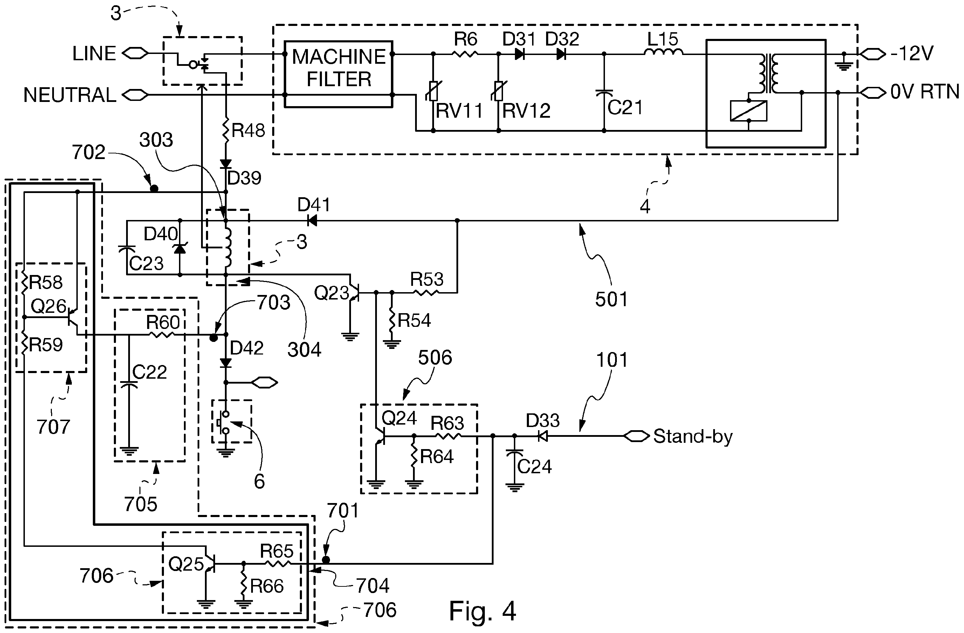

With reference to Fig. 4, in a preferred embodiment the connection between the input terminal 701 and the control unit 2 is established through the capacitor C24 and the diode D33; in particular, the input terminal 701 is connected to the terminal common to both the capacitor C24 and the diode D33.

The drain module 704 comprises a third inverting logic port of the open collector N type 706 and a fourth logic port of the open collector P type 707. The input of the drain module 704 coincides with an input of the third logic port 706, an output of the third logic port 706 is connected to an input of the fourth logic port 707. An output of the fourth logic port 707 coincides with the second output of the drain module 704 and is therefore connected to the network 705. The positive supply of the fourth logic port 707, instead of being connected to a fixed reference voltage, coincides with the first output of the drain module 704.

In a preferred embodiment, the third logic port 706 comprises an npn BJT transistor Q25 in grounded emitter configuration and the resistors R65 and R66. A first terminal of the resistor R65 coincides with the input of the third logic port 706, a second terminal of the resistor R65 is connected to the base of the transistor Q25 and to a first terminal of the resistor R66, a second terminal of the resistor R66 is connected to ground, and finally the collector of the transistor Q25 coincides with the output of the third logic port 706.

The fourth logic port 707 is a stage comprising a pnp BJT transistor Q26 and the resistors R58 and R59. A first terminal of the resistor R59 coincides with the input of the fourth logic port 707, a second terminal of the resistor R59 is connected to the base of the transistor Q25 and to a first terminal of the resistor R58, a second terminal of the resistor R58 is connected to the base of the transistor Q26, which coincides with the positive supply of the fourth logic port 707 connected to the control terminal of the switch 303. Finally, the collector of the transistor Q26 coincides with the output of the third logic port 703 and is therefore connected to the terminal common to both the resistor R60 and the capacitor C22. The man skilled in the art may replace one or more of the above-mentioned BJT transistors with transistors employing different technologies, e.g. MOSFET, JFET, HEMT, HBT, IGBT, DMOS, etc.

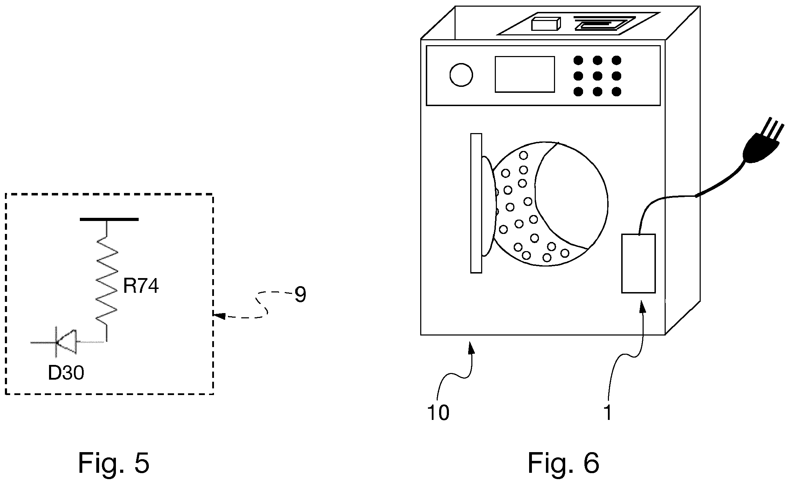

With reference to Fig. 5, in all of the above-described embodiments a read circuit 9 for reading the state of the wake-up switch 6 may be connected to the ungrounded terminal of the switch 6. In a preferred embodiment, the read circuit 9 comprises the series of a diode D30 and a resistor R74, the cathode of the diode D30 being connected to the switch 6 and the anode of the diode D30 being connected to the resistor R74, whose other terminal is connected to a fixed voltage higher than the ground voltage. The logic signal indicating the state of the switch 6 (low level if the switch 6 is closed, high level if it is open) can be read, e.g. by the control unit, at the connection point between the diode D30 and the resistor R74.

Fig. 6 shows a household appliance 10, in particular a washing machine, that comprises the stand-by circuit 1 according to the present invention.

The examples described so far with reference to Figs. 1-6 must not be considered to be limiting the present invention.

It is also clear that the parts of the stand-by circuit may be mounted on one or more interconnected boards, and that the dimensions of the components of the circuit depend on the specific applications for which it is intended. The stand-by circuit according to the invention is preferably produced by using discrete components, but it is clear that a part thereof may be integrated into a chip.

In a preferred embodiment, which is particularly advantageous when applied to a household appliance, the components of the stand-by circuit 1 have the values listed in the following Table 1.

| Component | Value/code |
|---|---|
| Relay 3 | G5LA-1-E-CF 12V DC (OMRON) |
| R48 | 470 Ω |
| D39 | 1N4007 |
| D40 | MMSZ5245 (Vishay) |
| C23 | 100 µF |
| D41 | 1N4007 |
| R60 | 470 Ω |
| C22 | 22 µF |
| D42 | 1N4007 |
| Q23 | KSP44TA |
| Q24 | BC847_1 |
| R53 | 2,7 kΩ |
| R54 | 10 kΩ |
| R63 | 2,7 kΩ |
| R64 | 10 kΩ |
| C24 | 100 µF |
| D33 | D1N4148 |
| R60 | 470 Ω |
| C22 | 22 µF |
| Q26 | ZTX758 |
| Q25 | KSP44TA TO92 |
| R65 | 22 kΩ |
| R66 | 10 kΩ |
| R58 | 10 kΩ |
| R59 | 2,7 kΩ |

## Claims

1. A stand-by circuit (1), adapted to be applied in a household appliance, comprising a first input (100) for receiving a phase of a mains supply, a second input (101) for receiving a stand-by command, a monostable switch (3), an AC-DC converter (4),
wherein said monostable switch (3) is adapted to connect said first input (100) electrically to said AC-DC converter (4) when said monostable switch (3) is energized, said stand-by circuit further comprising an energizer module (5) adapted to energize said monostable switch (3), holding it in an unstable position of connection to said AC-DC converter (4), when at the output of said converter (4) there is a voltage other than the ground voltage,
said energizer module (5) being further adapted to interrupt its energizing action upon said monostable switch (3) if there is an active stand-by signal at said second input (101), so as to cause said monostable switch to switch to a stable position of connection to a control branch (305), and to break the electric connection between said converter (4) and said first input (100), so as under said stable position a stand-by condition state being obtained wherein power consumption of the household appliance is close to 0 W, said stand-by circuit (1) further comprising a wake-up switch (6) which allows, when closed, to energize said switch (3) so as to allow the electric connection between said first input (100) and said converter (4),
**characterized in that** said monostable switch (3) is a two-way monostable relay in which energization occurs by causing a current to flow in said control branch (305), said control branch (305) being comprised between a first (303) and a second (304) control terminal, and wherein said two-way monostable relay operationally connects said first input (100) to the first control terminal (303) of said two-way monostable relay when the latter is not energized.

2. A circuit according to claim 1, wherein said first control terminal (303) is operationally connected to said first input (100) through a diode (D39) and a resistor (R48) in series.

3. A circuit according to any one of claims 1 or 2, wherein said energizer module (5) comprises a diode (D41) that connects an output of said converter (4) to said first control terminal (303).

4. A circuit according to any one of claims 1 to 3, wherein said energizer module (5) comprises a first inverting logic port of the open collector type (505) operationally connected between said output (501) of said converter (4) and said second control terminal (304) of said relay, said energizer module (5) comprising a second logic port of the open collector type (506) operationally connected between said first logic port (505) and said second input (101) of said stand-by circuit (1), said output (501) of said converter (4) being operationally connected to said first control terminal (303)..

5. A circuit according to claim 4, wherein said second control terminal (304) is operationally connected to ground through said wake-up switch (6), said wake-up switch (6) being controlled by a push-button.

6. A circuit according to any one of claims 4 or 5, wherein a first resistive-capacitive network (7) is connected between said second control terminal (304) and the ground, said first resistive-capacitive network (7) comprising a resistor (R60) and a capacitor (C22) in series.

7. A circuit according to any one of claims 4 or 5, further comprising a blackout block (70), said blackout block (70) comprising:
- a drain module (704) comprising an input, a first and a second outputs;
- a second resistive-capacitive network (705) comprising a resistor (R60) and a capacitor (C22);
wherein a first terminal of said resistor (R60) of said second network (705) is connected to said second control terminal (304), a second terminal of said resistor (R60) of said second network (705) is connected to a first terminal of said capacitor (C22) of said second network (705), a second terminal of said capacitor (C22) of said second network (705) is connected to ground,
said first output of said drain module (704) is operationally connected to said first control terminal (303), said second output of said drain module (704) is connected to said first terminal of said capacitor (C22) of said second network (705), said input of said drain module (704) is operationally connected to said second input (101) of said stand-by circuit (1),
said drain module (704) being adapted to have low impedance between said outputs of said drain module (704) when said drain module (704) receives at its input an active standby signal.

8. A circuit according to claim 7, wherein said drain module (704) comprises:
- a third inverting logic port (706) of the open collector N type, said third logic port (706) comprising an input and an output;
- a fourth inverting logic port (707) of the open collector P type, said fourth logic port (707) comprising an input and an output;
wherein said input of said third logic port (706) coincides with said input of said drain module (704), said output of said third logic port (706) is operationally connected to said input of said fourth logic port (707), said output of said fourth logic port (707) coincides with said second output of said drain module (704), a positive supply of said fourth logic port (707) coinciding with said first output of said drain module (704).

9. A circuit according to claim 7 or 8, wherein the connection between said input of said drain module (704) and said second input (101) of said stand-by circuit (1) is established through a diode (D33) and a capacitor (C24).

10. A circuit according to any one of the preceding claims, further comprising a read circuit (9) connected to said wake-up switch (6), said read circuit (9) comprising a diode (D30) and a resistor (R74) in series.

11. A household appliance (10) comprising the circuit according to any one of the preceding claims.

12. A method for controlling a household appliance, said method using a stand-by circuit as in any of claims 1 to 10, and being **characterized by** the following steps:
- causing said monostable switch to open by means of a predetermined signal, said monostable switch being connected between an input of the household appliance and an AC-DC converter, said signal being generated by a control unit, said input being connected to an alternating current supply mains;
- causing said monostable switch to close following the actuation of a push-button by a user.

13. A method according to claim 12, wherein, when a blackout occurs on said supply mains at a first time instant and power is then restored on said supply mains at a second time instant following said first time instant, at said second time instant said switch will return to the state it was in at said first time instant.

## Patentansprüche

1. Standby-Schaltung (1), die angepasst ist, um in Haushaltsgeräten angewendet zu werden, umfassend einen ersten Eingang (100) zum Empfangen einer Phase einer Netzversorgung, einen zweiten Eingang (101) zum Empfangen eines Standby-Befehls, einen monostabilen Schalter (3), einen Wechselstrom-/Gleichstrom-Wandler (4),
wobei der monostabile Schalter (3) angepasst ist, um den ersten Eingang (100) elektrisch an den Wechselstrom-/Gleichstrom-Wandler (4) anzuschließen, wenn der monostabile Schalter (3) bestromt wird, wobei die Standby-Schaltung weiter ein Bestromungsmodul (5) umfasst, das angepasst ist, um den monostabilen Schalter (3) zu bestromen, wodurch er in einer unstabilen Anschlussstellung zum Wechselstrom-/Gleichstrom-Wandler (4) gehalten wird, wenn eine andere Spannung als die Massenspannung am Ausgang des Wandlers (4) vorhanden ist,
wobei das Bestromungsmodul (5) weiter angepasst ist, um seinen Bestromungsvorgang am monostabilen Schalter (3) zu unterbrechen, wenn ein aktives Standby-Signal am zweiten Eingang (101) vorhanden ist, um den monostabilen Schalter dazu zu veranlassen, auf eine stabile Anschlussstellung zu einem Steuerzweig (305) umzuschalten, und die elektrische Verbindung zwischen dem Wandler (4) und dem ersten Eingang (100) zu trennen, sodass unter der stabilen Stellung ein Standby-Modus-Zustand erhalten wird, in dem ein Stromverbrauch des Haushaltgeräts bei fast 0 W liegt,
wobei die Standby-Schaltung (1) weiter einen Aufweckschalter (6) umfasst, der es ermöglicht, wenn er geschlossen ist, den Schalter (3) zu bestromen, sodass die elektrische Verbindung zwischen dem ersten Eingang (100) und dem Wandler (4) ermöglicht wird,
**dadurch gekennzeichnet, dass**
der monostabile Schalter (3) ein monostabiles Zwei-Wege-Relais ist, in dem eine Bestromung stattfindet, indem ein Strom dazu veranlasst wird, in den Steuerzweig (305) zu fließen, wobei der Steuerzweig (305) zwischen einem ersten (303) und einem zweiten (304) Steueranschluss umfasst ist, und wobei das monostabile Zwei-Wege-Relais den ersten Eingang (100) an den ersten Steueranschluss (303) des monostabilen Zwei-Wege-Relais betriebsbereit anschließt, wenn Letzteres nicht bestromt wird.

2. Schaltung nach Anspruch 1, wobei der erste Steueranschluss (303) betriebsbereit an den ersten Eingang (100) durch eine Diode (D39) und einen Widerstand (R48) in Reihe angeschlossen ist.

3. Schaltung nach einem der Ansprüche 1 oder 2, wobei das Bestromungsmodul (5) eine Diode (D41) umfasst, die einen Ausgang des Wandlers (4) mit dem ersten Steueranschluss (303) verbindet.

4. Schaltung nach einem der Ansprüche 1 bis 3, wobei das Bestromungsmodul (5) einen ersten invertierenden logischen Port des offenen Kollektortyps (505) umfasst, der zwischen dem Ausgang (501) des Wandlers (4) und dem zweiten Steueranschluss (304) des Relais angeschlossen ist, wobei das Bestromungsmodul (5) einen zweiten logischen Port des offenen Kollektortyps (506) umfasst, der zwischen dem ersten logischen Port (505) und dem zweiten Eingang (101) der Standby-Schaltung (1) angeschlossen ist, wobei der Ausgang (501) des Wandlers (4) an den ersten Steueranschluss (303) angeschlossen ist.

5. Schaltung nach Anspruch 4, wobei der zweite Steueranschluss (304) an Masse durch den Aufweck-Schalter (6) angeschlossen ist, wobei der Aufweck-Schalter (6) durch einen Drucktaster gesteuert wird.

6. Schaltung nach einem der Ansprüche 4 oder 5, wobei ein erstes Widerstands-/Kondensatornetzwerk (7) zwischen dem zweiten Steueranschluss (304) und der Masse angeschlossen ist, wobei das erste Widerstands-/Kondensatornetzwerk (7) in Reihe einen Widerstand (R60) und einen Kondensator (C22) umfasst.

7. Schaltung nach einem der Ansprüche 4 oder 5, weiter umfassend einen Stromausfallblock (70), wobei der Stromausfallblock (70) umfasst:
- ein Drain-Modul (704), umfassend einen Eingang, einen ersten und einen zweiten Ausgang;
- ein zweites Widerstands-/Kondensatornetzwerk (705), umfassend einen Widerstand (R60) und einen Kondensator (C22);
wobei ein erster Anschluss des Widerstands (R60) des zweiten Netzwerks (705) an den zweiten Steueranschluss (304) angeschlossen ist, ein zweiter Anschluss des Widerstands (R60) des zweiten Netzwerks (705) an einen ersten Anschluss des Kondensators (C22) des zweiten Netzwerks (705) angeschlossen ist, ein zweiter Anschluss des Kondensators (C22) des zweiten Netzwerks (705) an Masse angeschlossen ist,
der erste Ausgang des Drain-Moduls (704) an den ersten Steueranschluss (303) angeschlossen ist, der zweite Ausgang des Drain-Moduls (704) an den ersten Anschluss des Kondensators (C22) des zweiten Netzwerks (705) angeschlossen ist, der Eingang des Drain-Moduls (704) betriebsbereit an den zweiten Eingang (101) der Standby-Schaltung (1) angeschlossen ist,
das Drain-Modul (704) angepasst ist, um eine geringe Impedanz zwischen den Ausgängen des Drain-Moduls (704) aufzuweisen, wenn das Drain-Modul (704) an seinem Eingang ein aktives Standby-Signal empfängt.

8. Schaltung nach Anspruch 7, wobei das Drain-Modul (704) umfasst:
- einen dritten invertierenden logischen Port (706) des offenen Kollektortyps N, wobei der dritte logische Port (706) einen Eingang und einen Ausgang umfasst;
- einen vierten invertierenden logischen Port (707) des offenen Kollektortyps P, wobei der vierte logische Port (707) einen Eingang und einen Ausgang umfasst;
wobei der Eingang des dritten logischen Ports (706) mit dem Eingang des Drain-Moduls (704) übereinstimmt, der Ausgang des dritten logischen Ports (706) an den Eingang des vierten logischen Ports (707) angeschlossen ist, der Ausgang des vierten logischen Ports (707) mit dem zweiten Ausgang des Drain-Moduls (704) übereinstimmt, wobei eine positive Versorgung des vierten logischen Ports (707) mit dem ersten Ausgang des Drain-Moduls (704) übereinstimmt.

9. Schaltung nach Anspruch 7 oder 8, wobei die Verbindung zwischen dem Eingang des Drain-Moduls (704) und dem zweiten Eingang (101) der Standby-Schaltung (1) durch eine Diode (D33) und einen Kondensator (C24) hergestellt wird.

10. Schaltung nach einem der vorstehenden Ansprüche, weiter umfassend eine Leseschaltung (9), die an den Aufweck-Schalter (6) angeschlossen ist, wobei die Leseschaltung (9) in Reihe eine Diode (D30) und einen Widerstand (R74) umfasst.

11. Haushaltsgerät (10), umfassend die Schaltung nach einem der vorstehenden Ansprüche.

12. Verfahren zum Steuern eines Haushaltsgeräts, wobei das Verfahren eine Standby-Schaltung wie in einem der Ansprüche 1 bis 10 verwendet, und durch die folgenden Schritte gekennzeichnet ist:
- den monostabilen Schalter dazu veranlassen, sich mittels eines vorbestimmten Signals zu öffnen, wobei der monostabile Schalter zwischen einem Eingang des Haushaltsgeräts und einem Wechselstrom-/Gleichstrom-Wandler angeschlossen ist, wobei das Signal durch eine Steuereinheit erzeugt wird, wobei der Eingang an eine alternierende Stromnetzversorgung angeschlossen ist;
- den monostabilen Schalter dazu veranlassen, sich nach der Betätigung eines Drucktasters durch einen Benutzer zu schließen.

13. Verfahren nach Anspruch 12, wobei, wenn ein Stromausfall an der Netzversorgung zu einem ersten Zeitpunkt stattfindet und eine Stromversorgung an der Netzversorgung zu einem zweiten Zeitpunkt nach dem ersten Zeitpunkt wiederhergestellt wird, der Schalter zum zweiten Zeitpunkt in den Zustand zurückkehren wird, in dem er zum ersten Zeitpunkt war.

## Revendications

1. Circuit de veille (1), adapté pour être appliqué dans un appareil électroménager, comprenant une première entrée (100) destinée à recevoir une phase d'une alimentation de secteur, une seconde entrée (101) destinée à recevoir un ordre de veille, un commutateur monostable (3), un convertisseur alternatif-continu (4),
dans lequel ledit commutateur monostable (3) est adapté pour connecter ladite première entrée (100) électriquement audit convertisseur alternatif-continu (4) lorsque ledit commutateur monostable (3) est alimenté en énergie, ledit circuit de veille comprenant en outre un module d'alimentation en énergie (5) adapté pour alimenter en énergie ledit commutateur monostable (3), en le maintenant dans une position instable de connexion audit convertisseur alternatif-continu (4), lorsque l'on a à la sortie dudit convertisseur (4), une tension autre que la tension de la masse,
ledit module d'alimentation en énergie (5) étant en outre adapté pour interrompre son action d'alimentation en énergie sur ledit commutateur monostable (3) si l'on a un signal de veille actif au niveau de ladite seconde entrée (101), de manière à amener ledit commutateur monostable à commuter vers une position de connexion stable à une branche de commande (305), et pour couper la connexion électrique entre ledit convertisseur (4) et ladite première entrée (100), de sorte que sous ladite position stable, une condition de veille soit obtenue dans laquelle la consommation de puissance de l'appareil électroménager est proche de 0 W,
ledit circuit de veille (1) comprenant en outre un commutateur de réveil (6) qui permet, lorsqu'il est fermé, d'alimenter en énergie ledit commutateur (3) de manière à permettre la connexion électrique entre ladite première entrée (100) et ledit convertisseur (4),
**caractérisé en ce que**
ledit commutateur monostable (3) est un relais monostable à deux voies dans lequel une alimentation en énergie se produit en amenant un courant à circuler dans ladite branche de commande (305), ladite branche de commande (305) étant comprise entre une première (303) et une seconde (304) borne de commande, et dans lequel ledit relais monostable à deux voies connecte opérationnellement ladite première entrée (100) à la première borne de commande (303) dudit relais monostable à deux voies lorsque ce dernier n'est pas alimenté en énergie.

2. Circuit selon la revendication 1, dans lequel ladite première borne de commande (303) est opérationnellement connectée à ladite première entrée (100) par le biais d'une diode (D39) et d'un résistor (R48) en série.

3. Circuit selon l'une quelconque des revendications 1 ou 2, dans lequel ledit module d'alimentation en énergie (5) comprend une diode (D41) qui connecte une sortie dudit convertisseur (4) à ladite première borne de commande (303).

4. Circuit selon l'une quelconque des revendications 1 à 3, dans lequel ledit module d'alimentation en énergie (5) comprend un premier port logique inverseur du type collecteur ouvert (505) connecté opérationnellement entre ladite sortie (501) dudit convertisseur (4) et ladite seconde borne de commande (304) dudit relais, ledit module d'alimentation en énergie (5) comprenant un deuxième port logique du type collecteur ouvert (506) connecté opérationnellement entre ledit premier port logique (505) et ladite seconde entrée (101) dudit circuit de veille (1), ladite sortie (501) dudit convertisseur (4) étant connectée opérationnellement à ladite première borne de commande (303).

5. Circuit selon la revendication 4, dans lequel ladite seconde borne de commande (304) est connectée opérationnellement à la masse par le biais dudit commutateur de réveil (6), ledit commutateur de réveil (6) étant commandé par un bouton poussoir.

6. Circuit selon l'une quelconque des revendications 4 ou 5, dans lequel un premier réseau résistif-capacitif (7) est connecté entre ladite seconde borne de commande (304) et la masse, ledit premier réseau résistif-capacitif (7) comprenant un résistor (R60) et un condensateur (C22) en série.

7. Circuit selon l'une quelconque des revendications 4 ou 5, comprenant en outre un bloc d'extinction (70), ledit bloc d'extinction (70) comprenant :
- un module de drain (704) comprenant une entrée, une première et une seconde sortie ;
- un second réseau résistif-capacitif (705) comprenant un résistor (R60) et un condensateur (C22) ;
dans lequel une première borne dudit résistor (R60) dudit second réseau (705) est connectée à ladite seconde borne de commande (304), une seconde borne dudit résistor (R60) dudit second réseau (705) est connectée à une première borne dudit condensateur (C22) dudit second réseau (705), une seconde borne dudit condensateur (C22) dudit second réseau (705) est connectée à la masse,
ladite première sortie dudit module de drain (704) est connectée opérationnellement à ladite première borne de commande (303), ladite seconde sortie dudit module de drain (704) est connectée à ladite première borne dudit condensateur (C22) dudit second réseau (705), ladite entrée dudit module de drain (704) est connectée opérationnellement à ladite seconde entrée (101) dudit circuit de veille (1),
ledit module de drain (704) étant adapté pour avoir une faible impédance entre lesdites sorties dudit module de drain (704) lorsque ledit module de drain (704) reçoit à son entrée, un signal de veille actif.

8. Circuit selon la revendication 7, dans lequel ledit module de drain (704) comprend :
- un troisième port logique inverseur (706) du type collecteur ouvert N, ledit troisième port logique (706) comprenant une entrée et une sortie ;
- un quatrième port logique inverseur (707) du type collecteur ouvert P, ledit quatrième port logique (707) comprenant une entrée et une sortie ;
dans lequel ladite entrée dudit troisième port logique (706) coïncide avec ladite entrée dudit module de drain (704), ladite sortie dudit troisième port logique (706) est connectée opérationnellement à ladite entrée dudit quatrième port logique (707), ladite sortie dudit quatrième port logique (707) coïncide avec ladite seconde sortie dudit module de drain (704), une alimentation positive dudit quatrième port logique (707) coïncidant avec ladite première sortie dudit module de drain (704).

9. Circuit selon la revendication 7 ou 8, dans lequel la connexion entre ladite entrée dudit module de drain (704) et ladite seconde entrée (101) dudit circuit de veille (1) est établie par le biais d'une diode (D33) et d'un condensateur (C24).

10. Circuit selon l'une quelconque des revendications précédentes, comprenant en outre un circuit de lecture (9) connecté audit commutateur de réveil (6), ledit circuit de lecture (9) comprenant une diode (D30) et un résistor (R74) en série.

11. Appareil électroménager (10) comprenant le circuit selon l'une quelconque des revendications précédentes.

12. Procédé de commande d'un appareil électroménager, ledit procédé utilisant un circuit de veille tel que dans l'une des revendications 1 à 10, et étant **caractérisé par** les étapes suivantes :
- le fait d'amener ledit commutateur monostable à s'ouvrir au moyen d'un signal prédéterminé, ledit commutateur monostable étant connecté entre une entrée de l'appareil électroménager et un convertisseur alternatif-continu, ledit signal étant généré par une unité de commande, ladite entrée étant connectée à un secteur d'alimentation à courant alternatif ;
- le fait d'amener ledit commutateur monostable à se fermer à l'issue de l'actionnement d'un bouton poussoir par un utilisateur.

13. Procédé selon la revendication 12, dans lequel, lorsqu'une extinction se produit sur ladite alimentation de secteur à un premier instant et que la puissance est ensuite rétablie sur ladite alimentation de secteur à un second instant à l'issue du premier instant, audit second instant, ledit commutateur retournera à l'état dans lequel il était audit premier instant.
